# EUROPEAN PATENT SPECIFICATION

(11) **EP 2 790 309 B1**
(45) Date of publication and mention of the grant of the patent: **23.02.2022**
(21) Application number: 12854814.6
(22) Date of filing: 22.11.2012
(51) Int. Cl.: H02K 33/16, A61C 17/20, A61C 17/22, A61C 17/34, A46B 15/00

(54) **LINEAR ACTUATOR AND ORAL HYGIENE DEVICE**
LINEARANTRIEB UND MUNDHYGIENEVORRICHTUNG
ACTIONNEUR LINÉAIRE ET DISPOSITIF D'HYGIÈNE BUCCALE

(30) Priority: 05.12.2011 JP 2011265624
(43) Date of publication of application: 15.10.2014
(73) Proprietor: Panasonic Corporation, Osaka 571-8501 (JP)
(72) Inventor: KOBAYASHI, Noboru, Osaka 540-6207 (JP); HASHIMOTO, Toshiharu, Osaka 540-6207 (JP); MORIGUCHI, Masashi, Osaka 540-6207 (JP)
(74) Representative: Grünecker Patent- und Rechtsanwälte PartG mbB
(86) International application number: PCT/JP2012/007541
(87) International publication number: WO 2013/084438

(56) References cited:
- EP-A2- 2 112 754
- JP-A- H09 252 843
- JP-A- H09 252 843
- JP-A- 2005 185 067

## Description

The present invention relates to an oscillation type linear actuator, which includes a movable unit that linearly reciprocates, and an oral cavity hygiene device.

Patent document 1 describes a linear actuator used as a drive source for an oral cavity hygiene device such as an electric toothbrush. The linear actuator includes a stator, an output shaft, and a movable element. The stator is cylindrical and includes an electromagnet. The output shaft is arranged at the inner side of the stator. The movable element is cylindrical and formed by a magnetic body fixed to the circumferential surface of the output shaft. Current is supplied to the electromagnet to reciprocate the movable element and the output shaft in the axial direction of the output shaft.

Patent document 2 describes a linear actuator that reduces excessive vibration generated when a movable element reciprocates. The linear actuator includes a movable element, which reciprocates on an output shaft, and a weight, which is separate from the movable element and which reciprocates on the same output shaft. The reciprocation of the weight absorbs or offsets the vibration generated when the movable element reciprocates. This reduces vibration.

EP 2112754 A2 relates to a vibratory linear actuator to be used in a razor. The actuator includes an electromagnet in the stator and permanent magnets attached to movable elements separated by a gap. The movable member and the attached driving members for the razor blades are arranged to reciprocate in opposite phase, which gives a torsional force to the razor blades.

JP H-09 252843 A relates to the driving source of an electric toothbrush, which combines linear and rotational movement of the brush head. The driving source includes an electromagnet in the stator and the moving element formed with a magnetic body. The moving element and the 35 attached brush move when the electromagnet is powered on, the brush moving in the reciprocation direction of the moving element. Two movable elements each with an attached brush are possible. The two moving elements reciprocate by an opposite phase to balance the toothbrush when a counter balance weight is attached to one of the two moving elements.

Patent Document 1: Japanese Laid-Open Patent Publication No. 2002-176758

Patent Document 2: Japanese Patent No. 3475949

In the linear actuator described in patent document 2, the movable element and the weight are arranged coaxially with the output shaft. This enlarges the linear actuator in the axial direction of the output shaft.

It is an object of the present invention to provide a compact linear actuator, which includes a plurality of movable elements. This is achieved by the features of the independent claim.

References to embodiments which do not fall under the scope of the claims are to be understood as examples useful for understanding the invention.

The claims are directed to Figs. 2, 3(a) to 3(c), 5, 6, 8, 9 showing an L-shaped connection member (50, 31). The remaining embodiments are only for explanatory purposes.

The present invention allows for reduction in the size of a linear actuator including a plurality of movable units.
Fig. 1 is a schematic view of a linear actuator according to a first embodiment of the present invention
Fig 2 is an exploded perspective view of the linear actuator of Fig. 1
Figs. 3A, 3B, and 3C are respectively a side View, a plan view, and a front view showing the linear actuator of Fig 1
Fig 4 is a schematic diagram of an electric toothbrush that includes the linear actuator of Fig. 1
Fig. 5 is a perspective view of a linear actuator according to a second embodiment of the present invention.
Fig, 6 is a perspective view of a linear actuator according to a third embodiment of the present invention.
Fig. 7 is a perspective view of a weight in the linear actuator of Fig, 6.
Fig 8 is a perspective view of a linear actuator according to a fourth embodiment of the present invention
Fig. 9 is a perspective view of an output shaft and a magnetic block in the linear actuator of Fig 8
Fig 10 is a perspective View of a linear actuator according to a fifth embodiment of the present invention
Fig. 11 vs a perspective View of an output shaft and a magnetic block in the linear actuator of Fig 10
Fig. 12 is front view of the linear actuator of Fig 12

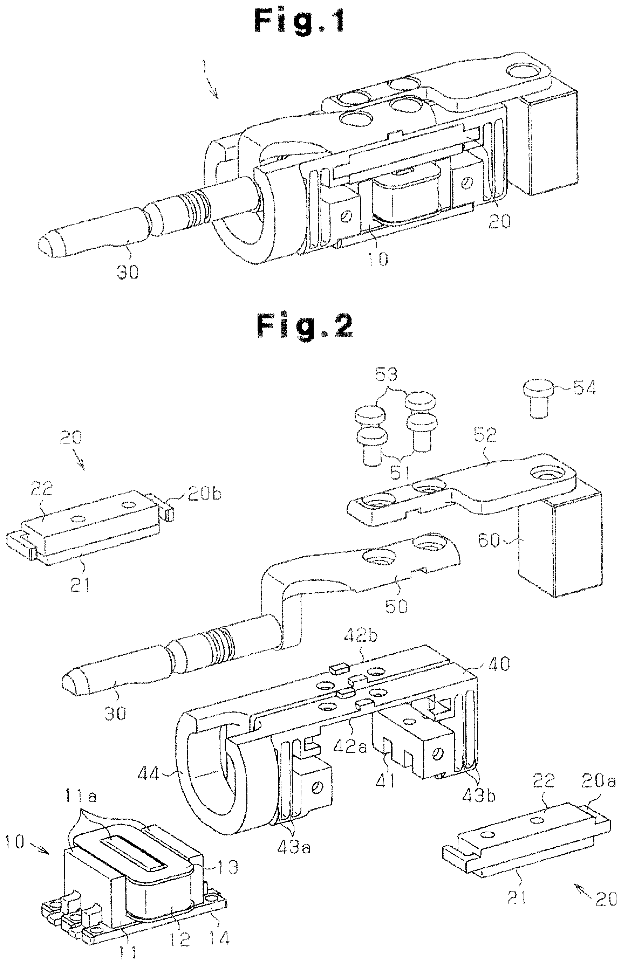

A linear actuator 1 according to a first embodiment of the present invention will now be described with reference to Figs 1 to 4 The linear actuator 1 of the first embodiment is used in an electric toothbrush, which is one example of an oral cavity hygiene device.

As shown in Fig. 1, the linear actuator 1 includes an electromagnetic block 10, which functions as a stator, a magnetic block 20, which functions as a movable element, and an output shaft 30, which reciprocates in an axial direction through cooperation of the blocks.

In the example shown in Fig. 2, the electromagnetic block 10 includes a core and a winding 12. The core 11 is comb teeth shaped and includes three teeth 11a. The winding 12 is wound around the middle tooth by way of an insulator 13. The core 11 may be a sintered body of a magnetic material or a laminated body of steel plates. The core 11 and the winding 12 are insulated by the insulator 13. The electromagnetic block 10 functions as an electromagnet when current is supplied to the winding 12. A fixing member 14 for fixing the linear actuator 1 to an electric toothbrush housing 70, which will be described later, is attached to the electromagnetic block 10.

The magnetic block 20 includes a permanent magnet 21 and a back yoke 22, which is made from a magnetic material and adhered and fixed to the permanent magnet 21. In the first embodiment, the linear actuator 1 of the first embodiment includes two magnetic blocks 20a and 20b, which function as the magnetic block 20.

The electromagnetic block 10 and the magnetic blocks 20a and 20b are held by a holding member 40 so that the electromagnetic block 10 and the permanent magnet 21 face each other spaced apart by a predetermined interval. For example, the holding member 40 includes an electromagnetic block accommodation portion 41, which accommodates the electromagnetic block 10, and magnetic block accommodation portions 42a and 42b, which accommodate the magnetic blocks 20a and 20b. The electromagnetic block 10 is accommodated in the electromagnetic block accommodation portion 41 so that the teeth 11a of the core 11 face the inner side and the fixing member 14 faces the outer side. The magnetic blocks 20a and 20b are respectively accommodated in the magnetic block accommodation portions 42a and 42b of the holding member 40 with the permanent magnet 21 facing the teeth 11a of the core 11 and the magnetic block 20a and the magnetic block 20b arranged next to each other. The holding member 40 includes plate spring units 43, 43a, and 43b. When the electromagnetic block 10 and the magnetic block 20a are each resiliently supported by the plate spring units 43a and 43b, a gap is formed and kept between the electromagnetic block 10 and the magnetic block 20a. In the same manner, when the electromagnetic block 10 and the magnetic block 20b are each resiliently supported by the plate spring units 43a and 43b, the gap is formed and kept between the electromagnetic block 10 and the magnetic block 20b. For example, each of the plate spring units 43a and 43b is formed by two sheets of plate springs.

A ring-shaped coupling portion 44 couples one end of the magnetic block accommodation portion 42a and one end of the magnetic block accommodation portion 42b. In the first embodiment, the holding member 40, which includes the electromagnetic block accommodation portion 41, the magnetic block accommodation portions 42a and 42b, and the plate spring units 43a and 43b, is a resin component formed integrally with the coupling portion 44. A material having small stretchability is suitable for the holding member 40, and an elastic material is suitable for the coupling portion 44.

An output shaft connection member 50 couples the magnetic block 20a to the output shaft 30. Bolts 51 fasten and fix one end of the output shaft connection member 50 to the back yoke 22 of the magnetic block 20a with the holding member 40 located in between. The other end of the output shaft connection member 50 is coupled to the output shaft 30. The output shaft connection member 31 is L-shaped, for example.

The magnetic block 20b is coupled to a weight 60 by a weight connection member 52, Bolts 53 fasten and fix one end of the weight connection member 52 to the back yoke 22 of the magnetic block 20b with the holding member 40 located in between. A bolt 54 fixes the other end of the weight connection member 52 to the weight 60. The weight 60 may be cuboidal-shaped, for example.

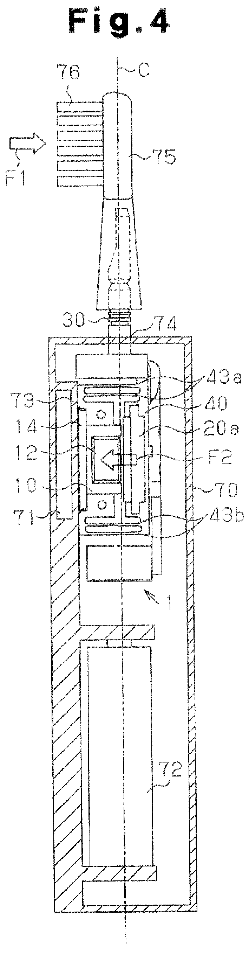

In the example shown in Fig. 4, the electromagnetic block 10 functions as the stator and is fixed to the housing 70 of the electric toothbrush. When the electromagnetic block 10 is supplied with power, the magnetic blocks 20a and 20b function as movable elements.

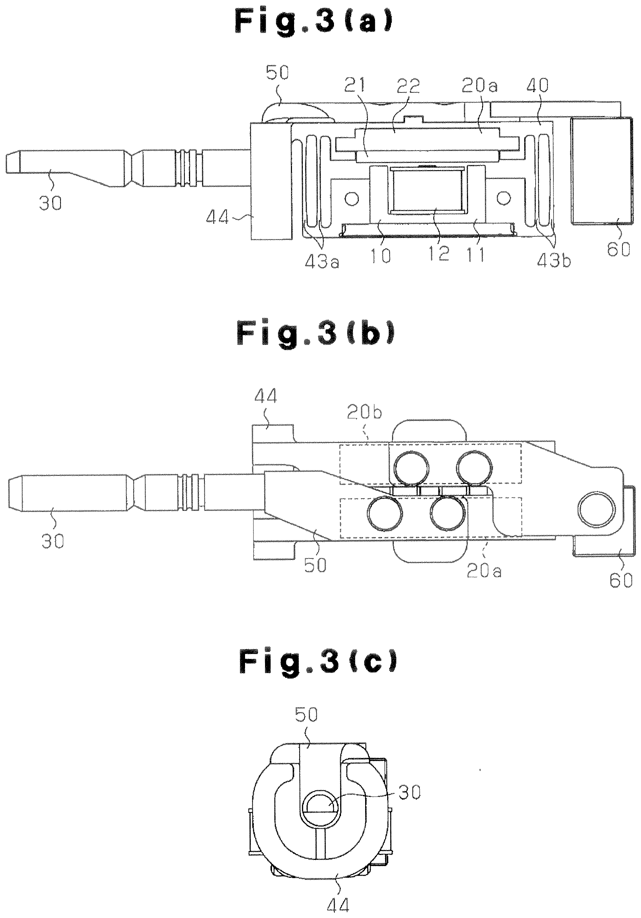

When the current supplied to the winding 12 of the electromagnetic block 10 shown in Fig. 3A is cyclically reversed, each of the magnetic blocks 20a and 20b are reciprocated by the magnetic thrust (attracting force and repelling force) generated between the permanent magnet 21 and the core 11, which becomes the magnetic pole of the electromagnet The holding member 40 restricts the reciprocation direction of the magnetic blocks 20a and 20b. Thus, the magnetic blocks 20a and 20b use the elastic deformation of the holding member 40 and reciprocate along the opposing surfaces of the electromagnetic block 10 between the plate spring units 43a and 43b.

As shown in Fig 3B, the magnetic block 20a and the magnetic block 20b are arranged parallel to each other in a direction orthogonal to the reciprocation direction of the magnetic blocks 20a and 20b. The directions and the like of the permanent magnet 21 of each magnetic block are set so that the magnetic block 20a and the magnetic block 20b are reciprocated in opposite phases. The output shaft 30 is coupled to the magnetic block 20a so that the axial direction of the output shaft 30 is the same as the reciprocation direction of the magnetic blocks 20a and 20b. The weight 60 is coupled to the magnetic block 20b at the side opposite to the output shaft 30 in the axial direction of the output shaft 30. The holding member 40 couples the output shaft 30 and the weight 60 to the coupling portion 44. As shown in Figs. 3A and 3B, the coupling portion 44 may be formed at a portion located toward the distal end of the linear actuator 1 from the magnetic blocks 20a and 20b.

As shown in Fig. 3C, the L-shaped output shaft connection member 50 arranges the output shaft 30 in the central portion of the linear actuator 1 in a plane orthogonal to the reciprocation direction of the magnetic blocks 20a and 20b.

The operation of the linear actuator 1 of the first embodiment will now be described. In the linear actuator 1, the magnetic block 20a and the magnetic block 20b, which are two movable elements driven to reciprocate in the same direction as the axial direction of the output shaft 30, are arranged in parallel. Accordingly, the linear actuator 1 may be reduced in size in the axial direction of the output shaft 30, that is, the reciprocation direction of the movable elements. The magnetic blocks 20a and 20b and the electromagnetic block 10 are resiliently supported by the plate spring units 43a and 43b of the holding member 40. This eliminates the need for a separate member such as a bearing to hold the magnetic blocks 20a and 20b and the electromagnetic block 10 at a predetermined location with a gap between the magnetic blocks 20a and 20b and the electromagnetic block 10. This allows for the linear actuator 1 to be reduced in size.

The magnetic block 20a and the magnetic block 20b are reciprocated in opposite phases. The output shaft 30 is connected to the magnetic block 20a. The weight 60 is connected to the magnetic block 20b Since the output shaft 30 and the weight 60 reciprocate in opposite phases, the reciprocation of the magnetic blocks 20a and 20b offset vibration, which is generated by the reciprocation of the magnetic blocks 20a and 20b. This reduces vibration. With regard to the reciprocation of the magnetic blocks 20a and 20b, the output shaft 30 and the weight 60 are arranged on opposite ends. Thus, it is relatively easy to align the center of gravity positions of the magnetic blocks 20a and 20b in the direction orthogonal to the reciprocation direction of the magnetic blocks 20a and 20b

The elastic coupling portion 44 couples the magnetic block 20a and the magnetic block 20b. Thus, the magnetic block 20a and the magnetic block 20b may be resonated when driven. This improves the driving efficiency of the linear actuator 1. The coupling portion 44 is ring-shaped and the output shaft 30 is arranged to extend through the central portion of the ring. This arrangement is effective for limiting enlargement of the linear actuator 1. The coupling portion 44 is formed integrally with the holding member 40. Thus, there is no need to couple the coupling portion 44 to the holding member 40. Accordingly, the manufacturing of the linear actuator 1 may be simplified.

The output shaft connection member 50, which couples the magnetic block 20a and the output shaft 30, is designed to be L-shaped. For example, the location of the bent portion in the L-shape and the length from the bent portion to the end of the output shaft connection member 50 may be set to conform to the designed location of the output shaft 30 in a plane that is orthogonal to the reciprocation direction of the magnetic blocks 20a and 20b. This increases the degree of design freedom for the linear actuator 1. Further, when using the linear actuator 1 as a drive source for an electric toothbrush, the output shaft 30 may easily be arranged along the center axis C (refer to Fig. 4) of the electric toothbrush.

The weight connection member 52 couples the magnetic block 20b and the weight 60. This increases the degree of design freedom for the shape of the weight 60. For example, when the weight 60 is box-shaped, the manufacturing of the weight 60 is facilitated.

The electric toothbrush including the linear actuator of the first embodiment will now be described.

As shown in Fig. 4, the electric toothbrush of the first embodiment includes the housing 70, the linear actuator 1, which is arranged in the housing 70, a control circuit 71, which controls the linear actuator 1, and a power supply such as a battery 72 The housing 70 includes a mount 73 corresponding to the fixing member 14. When the fixing member 14, which is attached to the electromagnetic block 10, is fixed to the mount 73 in the housing 70, the linear actuator 1 is coupled to the housing 70. The winding 12 of the electromagnetic block 10 is connected to the control circuit 71 by a wire (not shown). The control circuit 71 may be, for example, included on a substrate arranged on the mount 73 in the housing 70. Power is supplied from the battery 72 to the control circuit 71.

The housing 70 includes a through hole 74, and the output shaft 30 projects out of the housing 70 from the through hole 74. A brush attachment 75 for brushing teeth is connected to the distal end of the output shaft 30. In the first embodiment, the mount 73, which is fixed to the electromagnetic block 10, and a brush 76 of the brush attachment 75 are arranged on the same side of the center axis C of the electric toothbrush.

The operation of the electric toothbrush in the first embodiment will now be described.

As shown by the arrow in Fig. 4, when the electric toothbrush is in use, the brush attachment 75 receives a pushing force F1 in accordance with contact between the teeth of the user and the brush 76. In the linear actuator 1, the electromagnetic block 10 fixed to the mount 73 generates a magnetic attraction force F2 at the permanent magnets 21 of the magnetic blocks 20a and 20b. The direction of the magnetic attraction force F2 between the electromagnetic block 10 and the magnetic blocks 20a and 20b is opposite to the direction in which the pushing force F1 acts on the brush attachment 75. Accordingly, the pushing force F1 and the attraction force F2 offset each other and reduce the load applied to the holding member 40 of the linear actuator 1.

For example, each plate spring of the plate spring units 43a and 43b of the holding member 40 are parallel to the direction in which the pushing force F1 acts on the brush attachment 75. The opposite ends of each plate spring unit support the electromagnetic block 10 and the magnetic blocks 20a and 20b. The pushing force F1 acting on the brush attachment 75 pulls the plate springs in a direction separating the magnetic blocks 20a and 20b from the fixed electromagnetic block 10. As a result, the pushing force F1 aids the plate spring units 43a and 43b to support the electromagnetic block 10 and the magnetic blocks 20a and 20b. Accordingly, the compression load on the plate spring units 43a and 43b may be reduced. This limits deformation of the holding member 40, in particular, the plate spring units 43a and 43b.

The first embodiment has the advantages described below.
(1) The linear actuator 1 includes the two magnetic blocks 20a and 20b, which are arranged in parallel. The magnetic blocks 20a and 20b are reciprocated in opposite phases while the magnetic blocks 20a and 20b are arranged in parallel. The axial direction of the output shaft 30 connected to one of the magnetic blocks 20a and 20b is the same as the reciprocation direction of the magnetic blocks 20a and 20b. The axial direction of the output shaft 30 connected to one of the magnetic blocks 20a and 20b is the same as the reciprocation direction of the magnetic blocks 20a and 20b. This structure allows for the linear actuator 1, which includes a plurality of movable elements (20a and 20b), to be reduced in size in the axial direction of the output shaft 30, that is, the reciprocation direction of the movable element. Further, reduction in the size of the linear actuator 1 decreases the power used to drive the linear actuator 1.
(2) The magnetic block 20a, which is connected to the output shaft 30, and the magnetic block 20b, which is connected to the weight 60, are different movable elements that are driven and reciprocated in opposite phases . This offsets the vibration generated by the reciprocation of the magnetic blocks 20a and 20b and allows for vibration reduction.
(3) The output shaft 30 is arranged on the end of the magnetic block 20a and the weight 60 is arranged on the end of the magnetic block 20b so that the output shaft 30 and the weight 60 are arranged on opposite sides in the reciprocation direction. This allows for the center of gravity positions of the magnetic blocks 20a and 20b to be aligned in a direction orthogonal to the reciprocation direction of the magnetic blocks 20a and 20b. Thus, vibration may be reduced.
(4) The holding member 40 hold the electromagnetic block 10 and the magnetic blocks 20a and 20b so that the electromagnetic block 10 and the magnetic blocks 20a and 20b face each other with a gap in between. The plate springs of the holding member 40 resiliently support the two ends of each of the electromagnetic block 10 and the magnetic blocks 20a and 20b. This eliminates the need for a separate member such as a bearing to hold the electromagnetic block 10 and the magnetic blocks 20a and 20b at predetermined locations with a gap between one another. Accordingly, the linear actuator 1 may easily be reduced in size. Further, the number of components is decreased. This reduces the manufacturing cost of the linear actuator 1.
(5) The magnetic block 20a, which is connected to the output shaft 30, and the magnetic block 20b, which is connected to the weight 60, are coupled to the elastic coupling portion 44 at one end of each of the magnetic blocks 20a and 20b. This drives and resonates the magnetic block 20a and the magnetic block 20b. Thus, the driving efficiency of the linear actuator 1 is improved.
(6) The weight connection member 52 couples the weight 60 to the magnetic block 20b. This increases the degree of design freedom for the shape of the weight 60. Thus, the weight 60 may have a simple shape to facilitate the manufacturing of the weight 60 and allow for reduction in the manufacturing cost of the linear actuator 1.
(7) The output shaft 30 is arranged at the central portion of the linear actuator 1 on a plane orthogonal to the reciprocation direction of the magnetic blocks 20a and 20b. Thus, when the linear actuator 1 is used in an electric toothbrush, the output shaft 30 may be arranged on the center axis C of the electric toothbrush.
(8) The L-shaped output shaft connection member 50 couples the output shaft 30 and the magnetic block 20a. This facilitates the coupling of the output shaft 30 and the magnetic block 20a. Further, the degree of design freedom is increased for the location of the output shaft 30 in the plane orthogonal to the reciprocation direction of the magnetic blocks 20a and 20b. This facilitates the arrangement of the output shaft 30 in the central portion of the linear actuator 1.
(9) The electric toothbrush includes the linear actuator 1 and the brush attachment 75, which is used to brush teeth and is connectable to the output shaft 30 of the linear actuator 1. This allows the electric toothbrush to be reduced in size in the axial direction of the brush attachment 75.
(10) The linear actuator 1 is fixed to the housing 70 so that the direction of the magnetic attraction force F2, which acts between the electromagnetic block 10 and the magnetic blocks 20a and 20b, is opposite to the direction of the pushing force F1, which acts on the brush attachment 75. The pushing force F1 and the attraction force F2 offset each other. This reduces the load applied to the holding member 40 of the linear actuator 1.
(11) The ends of the opposing plate spring units 43a and 43b, which are formed in the holding member 40, hold the electromagnetic block 10 and the magnetic blocks 20a and 20b. The pushing force F1 acts in a direction in which the plate springs of the plate spring units 43a and 43b are pulled. This reduces the load that compresses the plate spring units 43a and 43b and consequently allows for reduction in deformation of the holding member 40, in particular, deformation of the plate spring units 43a and 43b.

A linear actuator 2 according to a second embodiment of the present invention will now be described focusing on differences from the first embodiment. The basic structure of the second embodiment is similar to that of the first embodiment. Same reference characters are given to those components that are substantially the same as the corresponding components of the first embodiment. Such components will not be described.

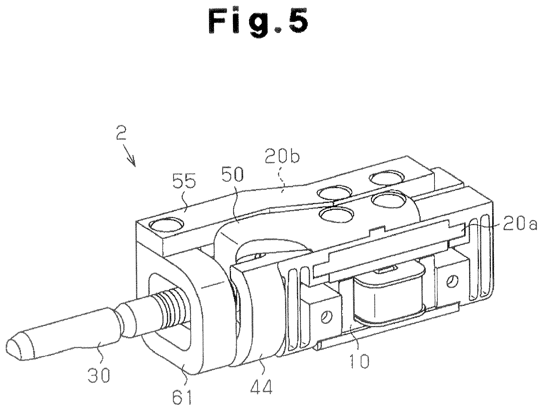

Referring to Fig. 5, the linear actuator 2 of the second embodiment differs from the first embodiment in the location of a weight 60.

In the same manner as the first embodiment, the magnetic block 20a and the magnetic block 20b of the second embodiment are arranged in parallel in a direction orthogonal to the reciprocation direction of the magnetic blocks 20a and 20b. The magnetic block 20a and the magnetic block 20b reciprocate in opposite phases. The output shaft connection member 50 couples the output shaft 30 to the magnetic block 20a. The output shaft connection member 50 couples the output shaft 30 to the magnetic block 20a. A weight connection member 55 couples the weight 61 to the magnetic block 20b The weight 61 and the output shaft 30 are arranged at the same side in the reciprocation direction of the magnetic blocks 20a and 20b. In the illustrated example, the weight 61 is located between the output shaft 30 and the magnetic blocks 20a and 20b in the reciprocation direction of the magnetic blocks 20a and 20b

The output shaft 30 and the weight 61 are reciprocated in opposite phases. This offsets the vibration generated by the reciprocation of the magnetic blocks 20a and 20b and reduces vibration. In particular, the output shaft 30 and the weight 61 are arranged on the same side in the reciprocation direction of the magnetic blocks 20a and 20b. This allows for alignment of the center of gravity positions of the magnetic blocks 20a and 20b in the reciprocation direction of the magnetic blocks 20a and 20b.

The weight 61 may be an annular member arranged parallel to the coupling portion 44 in the axial direction of the output shaft 30. The output shaft 30 is arranged to extend through central openings of the annular coupling portion 44 and the weight 61. This structure limits enlargement of the linear actuator 2.

The linear actuator 2 of the second embodiment may also be fixed to the housing 70 of an electric toothbrush in the same manner as the first embodiment.

In addition to advantages (1), (2), and (4) to (11) of the first embodiment, the second embodiment has the following advantage.

(12) The output shaft 30 and the weight 61 are arranged on the same side in the reciprocation direction of the magnetic block 20a. This allows for alignment of the center of gravity positions of the magnetic blocks 20a and 20b in the reciprocation direction of the magnetic blocks 20a and 20b. Thus, vibration generated by the reciprocation of the magnetic blocks 20a and 20b may be reduced.

A linear actuator 3 according to a third embodiment of the present invention will now be described focusing on differences from the first embodiment. The basic structure of the third embodiment is similar to that of the first embodiment. Same reference characters are given to those components that are substantially the same as the corresponding components of the first embodiment. Such components will not be described.

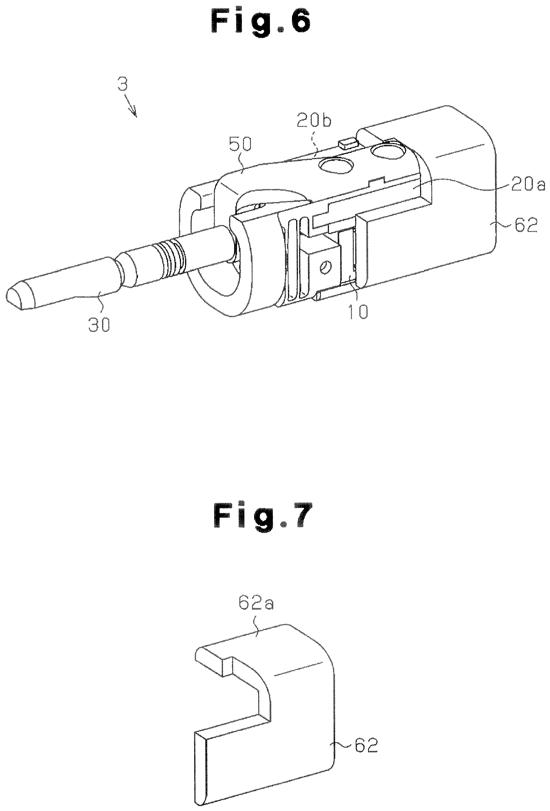

Referring to Fig. 6, the linear actuator 3 of the third embodiment differs from the first embodiment in the location of a weight 62.

In the same manner as the first embodiment, the magnetic block 20a and the magnetic block 20b of the third embodiment are arranged in parallel in a direction orthogonal to the reciprocation direction of the magnetic blocks 20a and 20b. The magnetic block 20a and the magnetic block 20b reciprocate in opposite phases. The output shaft connection member 50 couples the output shaft 30 to the magnetic block 20a. The output shaft connection member 50 couples the output shaft 30 to the magnetic block 20a. The weight 62 is coupled to the magnetic block 20b so that the weight 62 partially or entirely faces a side portion of the linear actuator 3 in a direction orthogonal to the reciprocation direction of the magnetic blocks 20a and 20b.

In the example of Fig. 7, the weight 62 is a single bent plate. The weight 62 includes two pieces extending parallel to the reciprocation direction of the magnetic blocks 20a and 20b. The two pieces respectively face two adjacent side surfaces of the linear actuator 3. The weight 62 is located at the opposite side of the output shaft 30 in the reciprocation direction of the magnetic blocks 20a and 20b. One of the two pieces of the weight 62 functions as a coupling portion coupled to the magnetic block 20b. This eliminates the need for a dedicated weight connection member that couples the weight 62 and the magnetic block 20b. Thus, the number of components may be decreased, and the manufacturing cost may be consequently reduced.

The output shaft 30 and the weight 62 are reciprocated in opposite phases. This offsets the vibration generated by the reciprocation of the magnetic blocks 20a and 20b and reduces vibration. In particular, the weight 61 is arranged on the side opposite to the output shaft 30 in the reciprocation direction of the magnetic blocks 20a and 20b. Further, at least a portion of the weight 62 is arranged beside the linear actuator 3 parallel to the reciprocation direction of the magnetic blocks 20a and 20b. This allows for alignment of the center of gravity positions of the magnetic blocks 20a and 20b in the reciprocation direction of the magnetic blocks 20a and 20b and a direction orthogonal to the reciprocation direction.

When the weight 62 is entirely arranged along the side surface of the linear actuator 3, the linear actuator 3 may be shortened.

In addition to advantages (1), (2), (4), (5), and (7) to (11) of the first embodiment, the third embodiment has the following advantage.

(13) The output shaft 30 is arranged on the end of the magnetic block 20a, and the weight 62 is arranged on the side portion of the magnetic block 20b. This allows for alignment of the center of gravity positions of the magnetic blocks 20a and 20b in the reciprocation direction of the magnetic blocks 20a and 20b and a direction orthogonal to the reciprocation direction. Thus, vibration generated by the reciprocation of the magnetic blocks 20a and 20b may be reduced.

A linear actuator 4 according to a fourth embodiment of the present invention will now be described focusing on differences from the first embodiment. The basic structure of the fourth embodiment is similar to that of the first embodiment. Same reference characters are given to those components that are substantially the same as the corresponding components of the first embodiment. Such components will not be described.

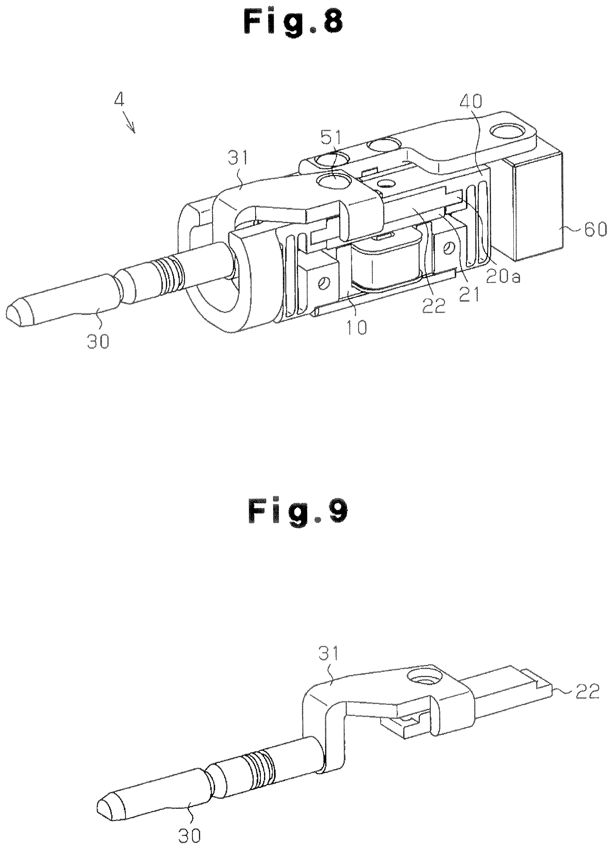

Referring to Figs. 8 and 9, in the linear actuator 4 of the fourth embodiment, the output shaft 30, the back yoke 22 of the magnetic block 20a, and an L-shaped connection portion 31 connecting the output shaft 30 and the back yoke 22 are formed integrally. A bolt 51 fixes the connection portion 31 to the holding member 40. This eliminates the need for a dedicated output shaft connection member that couples the magnetic block 20a and the output shaft 30. Thus, the number of components may be decreased, and the manufacturing cost may be consequently reduced. Further, the coupling of the magnetic block 20a and the output shaft 30 is facilitated.

The connection portion 31 is L-shaped Thus, the degree of design freedom is increased for the location of the output shaft 30 in a plane orthogonal to the reciprocation direction of the magnetic blocks 20a and 20b. This facilitates the arrangement of the output shaft 30 in the central portion of the linear actuator 4.

The linear actuator 4 of the fourth embodiment may also be fixed to the housing 70 of an electric toothbrush in the same manner as the first embodiment.

In addition to advantages (1) to (7) and (9) to (11) of the first embodiment, the fourth embodiment has the following advantage.

(14) The connection portion 31, which connects the output shaft 30 and the magnetic block 20a, is formed integrally with the back yoke 22. This eliminates the need for a dedicated output shaft connection member that couples the magnetic block 20a and the output shaft 30. Thus, the number of components may be decreased, and the manufacturing cost may be consequently reduced. Further, the coupling of the magnetic block 20a and the output shaft 30 is facilitated.

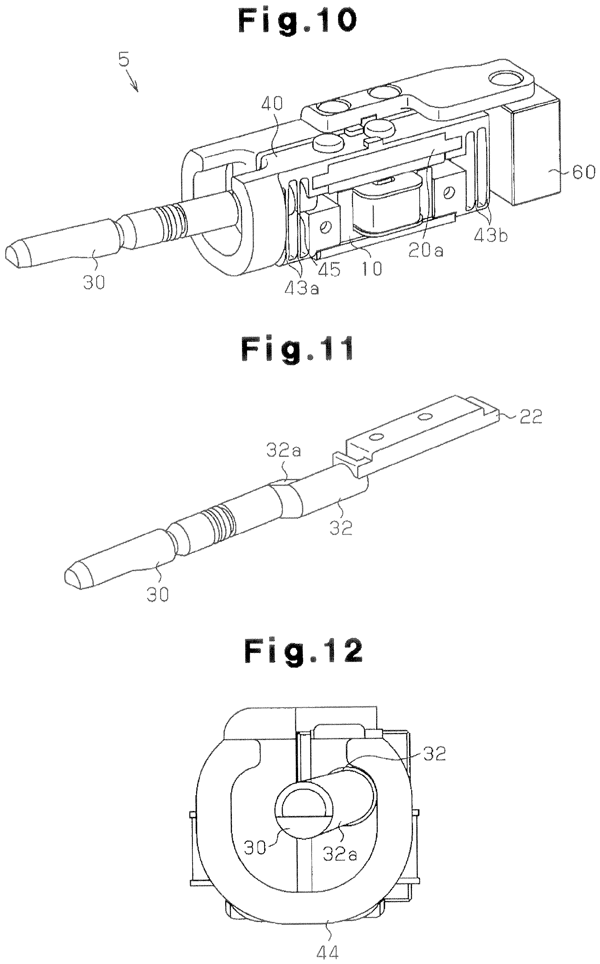

A linear actuator 5 according to a fifth embodiment of the present invention will now be described with reference to Figs. 10 to 12 focusing on differences from the first embodiment. The basic structure of the fifth embodiment is similar to that of the first embodiment. Same reference characters are given to those components that are substantially the same as the corresponding components of the first embodiment. Such components will not be described.

Referring to Fig. 10, in the linear actuator 5 of the fifth embodiment, a through hole 45 extends through the plate spring unit 43a of the holding member 40. The output shaft 30 is inserted through the through hole 45 and coupled to the magnetic block 20a.

As shown in Fig. 11, a connection portion 32 extends from the output shaft 30. An end of the connection portion 32 is coupled to an end of the back yoke 22 of the magnetic block 20a The connection portion 32 extends through the through hole 45. This couples the output shaft 30 and the magnetic block 20a. Accordingly, the linear actuator 5 may be reduced in size in the direction orthogonal to both of the reciprocation direction of the magnetic blocks 20a and 20b and the direction in which the magnetic blocks 20a and 20b are arranged in parallel. Further, there is no need for a dedicated output shaft connection member that couples the magnetic block 20a and the output shaft 30 Thus, the number of components may be decreased, and the manufacturing cost may be consequently reduced

As shown in Figs. 11 and 12, the connection portion 32 includes a diagonal portion 32a that projects diagonally relative to the axial direction of the output shaft 30. Accordingly, adjustment of the length and inclination angle of the diagonal portion 32a increases the degree of design freedom for the location of the output shaft 30 in a plane orthogonal to the reciprocation direction of the magnetic blocks 20a and 20b. This facilitates the arrangement of the output shaft 30 in the central portion of the linear actuator 5. The output shaft 30, the back yoke 22 of the magnetic block 20a and the connection portion 32 connecting the output shaft 30 and the back yoke 22 may be formed integrally

The linear actuator 5 of the fifth embodiment may also be fixed to the housing 70 of an electric toothbrush in the same manner as the first embodiment

In addition to advantages (1) to (7) and (9) to (11) of the first embodiment, the fifth embodiment has the following advantage.

(15) The output shaft 30 is inserted through the through hole 45 of the holding member 40 and coupled to magnetic block 20a. This allows for the linear actuator 5 to be reduced in size in the direction orthogonal to both of the reciprocation direction of the magnetic blocks 20a and 20b and the direction in which the magnetic blocks 20a and 20b are arranged in parallel. Further, there is no need for a dedicated output shaft connection member that couples the magnetic block 20a and the output shaft 30. Thus, the number of components may be decreased and the manufacturing cost may be consequently reduced,

The embodiments may be modified as described below

The shapes of the weights 60, 61, and 62 illustrated in the embodiments are only examples The shapes may be changed so as not to interfere with the reciprocation of the magnetic blocks 20a and 20b and the output shaft 30.

In the embodiments, among the ends of the magnetic block 20a and the magnetic block 20b, the coupling portion 44 is formed on the end that is closer to the output shaft 30 Instead, among the ends of the magnetic blocks 20a and 20b, the coupling portion 44 may be formed on the end opposite to the output shaft 30. The coupling portion 44 may also be arranged on the ends of the magnetic blocks 20a and 20b on the output shaft side and the side opposite to the output shaft as is known in the prior art.

The coupling portion 44 does not have to be formed integrally with the holding member 40 The coupling portion 44, which is discrete from the holding member 40, may be connected to the holding member 40 The holding member 40 and the coupling portion 44 do not have to be resin components and may be metal components . The holding member 40 only needs to be formed from a material that does not stretch much, and the coupling portion 44 only needs to be formed from an elastic material.

In the embodiments, the number of magnetic blocks 20 serving as movable elements is not limited to two and may be three or more In this case, the movable elements are arranged in parallel and adjacent movable elements are reciprocated in opposite phases. An output shaft is connected to or formed on at least one of the movable elements so that the longitudinal axis conforms to the reciprocation direction of the movable element. In another example, the output shaft is connected to or formed on two or more movable elements. In a further example, a weight is arranged on two or more movable elements. In a further example, the weight is arranged on two or more movable elements. The weight may be omitted depending on the amount of vibration.

In the embodiments, the electromagnetic block 10 functions as a stator, and the magnetic block 20 functions as the movable element. In another example, the magnetic block 20 functions as a stator, and the electromagnetic block 10 functions as a movable element that reciprocates. In this example, one of the electromagnetic block 10 and the magnetic block 20 may be a plurality of blocks that are arranged in parallel.

The linear actuator may be used as the drive source of an oral cavity hygiene device other than an electric toothbrush such as a stain removing device, an interdental brush, a tongue cleaner device, and the like or as the drive source of a device other than an oral cavity hygiene device. A driven body for oral cavity hygiene may be connectable to the output shaft of the linear actuator such as a brush attachment for brushing teeth, a stain removal attachment, an interdental cleaning brush attachment, and a tongue cleaning brush attachment. A driven body such as the brush attachment 75 for brushing teeth may be removable from the output shaft 30.

The embodiments may be combined, and the modifications may be combined as long as the resulting embodiments fall within the scope defined by the claims.

## Claims

1. A linear actuator (1) comprising:
a stator (10), a first movable element (20a) and a second movable element (20b), wherein the stator (10) includes an electromagnet comprising a core (11) including three teeth (11a) wherein a winding (12) is wound around the middle tooth, and each of the movable elements includes a permanent magnet (21);
an output shaft (30), configured to be connected to a brush attachment (75) and extending along a center axis (C) and arranged on an end of the first movable element (20a), wherein the output shaft (30) has an axial direction in a reciprocation direction of the movable elements (20a, 20b), wherein the reciprocation direction is along the center axis (C) orthogonal to a coil axis of the winding (12); and
a holding member (40), including an electromagnetic block accommodation portion (41) and magnetic block accommodation portions (42a, 42b) which accommodate the electromagnet and the two movable elements (20a, 20b) respectively, configured to hold the stator (10) and the two movable elements (20a, 20b) in such a manner that the movable elements (20a, 20b) are arranged in parallel with each other in a direction orthogonal to a reciprocation direction of the movable elements (20a, 20b),
wherein the holding member (40) holds the stator (10) and the plurality of movable elements (20a, 20b) in such a manner that the permanent magnet and the teeth (11a) of the core (11) of the electromagnet face each other with a gap in between, and the holding member (40) includes opposing plate springs (43a, 43b) that hold the electromagnet and the permanent magnet so that the electromagnet and the permanent magnet face each other with the gap in between, and the direction of the permanent magnet is set so that the first and second movable elements (20a, 20b) reciprocate in the reciprocation direction in opposite phases when the electromagnet is supplied with current;
wherein the linear actuator is **characterized by**
a weight (60, 61, 62) connected to the second movable element (20b), wherein the weight is arranged to partially or entirely face a side portion of the linear actuator in a direction orthogonal to the reciprocation direction, and the weight and the output shaft are reciprocated in opposite phases when the electromagnet is supplied with current; and
an L-shaped connection member (50; 31) that couples the output shaft (30) and the first movable element (20a), and is configured to arrange the output shaft (30) in a central portion of the linear actuator (1) on a plane orthogonal to the reciprocation direction.

2. The linear actuator (1) according to claim 1, wherein
the output shaft (30) and the weight (61) are arranged on the same side in the reciprocation direction and reciprocated in opposite phases.

3. The linear actuator (1) according to any one of claims 1 and 2, further comprising a ring-shaped elastic coupling member (44) that couples one end of the magnetic block accommodation portion (42a) and one end of the magnetic block accommodation portion (42b), wherein the ring-shaped elastic coupling member is formed on the end of the magnetic block accommodation portion (42a, 42b) closer to the output shaft (30).

4. The linear actuator (1) according to any one of claims 2 to 3, further comprising a connection member (52) that connects the weight (60) and the second movable element.

5. The linear actuator (1) according to any one of claims 2 to 3, wherein the weight (62) is a bent plate.

6. The linear actuator (1) according to claim 1, wherein the movable elements (20a, 20b) each comprise a back yoke (22), the L-shaped connection member (50,31) connecting the output shaft (30) and the first movable element (20a) is formed integrally with the back yoke (22).

7. The linear actuator (1) according to claim 1, wherein the output shaft (30) is inserted through a through hole (45) extending through the plate springs (43a) of the holding member (40) and coupled to the first movable element.

8. An oral cavity hygiene device comprising:
the linear actuator (1) according to any one of claims 1 to 7; and
a driven body used for oral cavity hygiene and connected to the output shaft (30).

9. The oral cavity hygiene device according to claim 8, wherein the linear actuator (1) is arranged so that a direction in which an attraction force acts between the electromagnet (10) and the permanent magnet (21) of the linear actuator (1) is opposite to a direction in which a pushing force acts on the driven body during use of the oral cavity hygiene device.

## Patentansprüche

1. Linear-Stellglied (1), das umfasst:
einen Stator (10), ein erstes bewegliches Element (20a) und ein zweites bewegliches Element (20b), wobei der Stator (10) einen Elektromagneten enthält, der einen Kern (11) umfasst, der drei Zacken (11a) enthält, wobei eine Wicklung (12) um den mittleren Zacken herum gewickelt ist und jedes der beweglichen Elemente einen Permanentmagneten (21) einschließt;
eine Abtriebswelle (30), die zum Verbinden mit einem Bürstenaufsatz (75) ausgeführt ist, sich entlang einer Mittelachse (C) erstreckt und an einem Ende des ersten beweglichen Elementes (20a) angeordnet ist, wobei die Abtriebswelle (30) eine axiale Richtung in einer Richtung von Hin-und-Herbewegung der beweglichen Elemente (20a, 20b) aufweist, und die Richtung von Hin-und-Herbewegung entlang der Mittelachse (C) im rechten Winkel zu einer Spulenachse der Wicklung (12) verläuft; sowie
ein Halteelement (40), das einen Elektromagnetblock-Aufnahmeabschnitt (41) sowie Magnetblock-Aufnahmeabschnitte (42a, 42b) enthält, die den Elektromagneten bzw. die zwei beweglichen Elemente (20a, 20b) aufnehmen, und das so ausgeführt ist, dass es den Stator (10) sowie die zwei beweglichen Elemente (20a, 20b) so hält, dass die beweglichen Elemente (20a, 20b) parallel zueinander in einer Richtung im rechten Winkel zu einer Richtung von Hin-und-Herbewegung der beweglichen Elemente (20a, 20b) angeordnet sind,
wobei das Halteelement (40) den Stator (10) und die Vielzahl beweglicher Elemente (20a, 20b) so hält, dass der Permanentmagnet und die Zacken (11a) des Kerns (11) des Elektromagneten einander mit einem Spalt zwischen ihnen zugewandt sind, und das Halteelement (40) gegenüberliegende Blattfedern (43a, 43b) enthält, die den Elektromagneten und den Permanentmagneten so halten, dass der Elektromagnet und der Permanentmagnet einander mit dem Spalt zwischen ihnen zugewandt sind, und die Richtung des Permanentmagneten so eingestellt ist, dass das erste und das zweite bewegliche Element (20a, 20b) sich in der Richtung von Hin-und-Herbewegung in entgegengesetzten Phasen hin- und herbewegen, wenn dem Elektromagneten Strom zugeführt wird;
wobei das Linear-Stellglied **gekennzeichnet ist durch**
ein Gewicht (60, 61, 62), das mit dem zweiten beweglichen Element (20b) verbunden ist, wobei das Gewicht so angeordnet ist, dass es teilweise oder vollständig einem Seitenabschnitt des Linear-Stellgliedes in einer Richtung im rechten Winkel zu der Richtung von Hin-und-Herbewegung zugewandt ist, und das Gewicht und die Ausgangswelle in entgegengesetzten Phasen hin- und herbewegt werden, wenn dem Elektromagneten Strom zugeführt wird; sowie
ein L-förmiges Verbindungselement (50; 31), das die Abtriebswelle (30) und das erste bewegliche Element (20a) koppelt und so ausgeführt ist, dass es die Abtriebswelle (30) in einem Mittelabschnitt des Linear-Stellgliedes (1) in einer Ebene im rechten Winkel zu der Richtung von Hin-und-Herbewegung anordnet.

2. Linear-Stellglied (1) nach Anspruch 1, wobei
die Abtriebswelle (30) und das Gewicht (61) in der Richtung von Hin-und-Herbewegung an der gleichen Seite angeordnet sind und in entgegengesetzten Phasen hin-undherbewegt werden.

3. Linear-Stellglied (1) nach einem der Ansprüche 1 und 2, das des Weiteren ein ringförmiges elastisches Kopplungselement (44) umfasst, das ein Ende des Magnetblock-Aufnahmeabschnitts (42a) und ein Ende des Magnetblock-Aufnahmeabschnitts (42b) koppelt, wobei das ringförmige elastische Kopplungselement an dem Ende des Magnetblock-Aufnahmeabschnitts (42a, 42b) ausgebildet ist, das näher an der Abtriebswelle (30) liegt.

4. Linear-Stellglied (1) nach einem der Ansprüche 2 bis 3, das des Weiteren ein Verbindungselement (52) umfasst, das das Gewicht (60) und das zweite bewegliche Element verbindet.

5. Linear-Stellglied (1) nach einem der Ansprüche 2 bis 3, wobei das Gewicht (62) eine gebogene Platte ist.

6. Linear-Stellglied (1) nach Anspruch 1, wobei die beweglichen Elemente (20a, 20b) jeweils ein hinteres Joch (back yoke) (22) umfassen,
das L-förmige Verbindungselement (50, 31), das die Abtriebswelle (30) und das erste bewegliche Element (20a) verbindet, integral mit dem hinteren Joch (22) ausgebildet ist.

7. Linear-Stellglied (1) nach Anspruch 1, wobei die Abtriebswelle (30) über ein Durchgangsloch (45) eingeführt ist, das durch die Tellerfedern (43a) des Halteelementes (40) hindurch verläuft, und mit dem ersten beweglichen Element gekoppelt ist.

8. Mundhöhlen-Hygienevorrichtung, die umfasst:
das Linear-Stellglied (1) nach einem der Ansprüche 1 bis 7; sowie
einen angetriebenen Körper, der für Mundhöhlen-Hygiene eingesetzt wird und mit der Abtriebswelle (30) verbunden ist.

9. Mundhöhlen-Hygienevorrichtung nach Anspruch 8, wobei das Linear-Stellglied (1) so angeordnet ist, dass eine Richtung, in der eine Anziehungskraft zwischen dem Elektromagneten (10) und dem Permanentmagneten (21) des Linear-Stellgliedes (1) wirkt, entgegengesetzt zu einer Richtung ist, in der beim Einsatz der Mundhöhlen-Hygienevorrichtung eine Schubkraft auf den angetriebenen Körper wirkt.

## Revendications

1. Actionneur linéaire (1) comprenant :
un stator (10), un premier élément mobile (20a) et un deuxième élément mobile (20b), où le stator (10) comprend un électroaimant comprenant un noyau (11) comprenant trois dents (11a) où un enroulement (12) est enroulé autour de la dent du milieu, et chacun des éléments mobiles comprend un aimant permanent (21) ;
un arbre de sortie (30), configuré pour être relié à un accessoire de brosse (75) et s'étendant le long d'un axe central (C) et agencé sur une extrémité du premier élément mobile (20a), où l'arbre de sortie (30) a une direction axiale dans une direction de va-et-vient des éléments mobiles (20a, 20b), où la direction de va-et-vient est le long de l'axe central (C) orthogonal à un axe de bobine de l'enroulement (12) ; et
un organe de maintien (40), comprenant une partie de logement de bloc électromagnétique (41) et des parties de logement de bloc magnétique (42a, 42b) qui logent respectivement l'électroaimant et les deux éléments mobiles (20a, 20b), configuré pour maintenir le stator (10) et les deux éléments mobiles (20a, 20b) de telle manière que les éléments mobiles (20a, 20b) soient agencés parallèlement l'un à l'autre dans une direction orthogonale à une direction de va-et-vient des éléments mobiles (20a, 20b),
dans lequel l'organe de maintien (40) maintient le stator (10) et la pluralité d'éléments mobiles (20a, 20b) de telle manière que l'aimant permanent et les dents (11a) du noyau (11) de l'électroaimant soient tournés les uns vers les autres avec un espace entre eux, et l'organe de maintien (40) comprend des ressorts à lame opposés (43a, 43b) qui maintiennent l'électroaimant et l'aimant permanent de sorte que l'électroaimant et l'aimant permanent soient tournés l'un vers l'autre avec l'espace entre eux, et la direction de l'aimant permanent est réglée de sorte que les premier et deuxième éléments mobiles (20a, 20b) effectuent un mouvement de va-et-vient dans la direction de va-et-vient en phases opposées lorsque l'électroaimant est alimenté en courant ;
dans lequel l'actionneur linéaire est **caractérisé par**
un poids (60, 61, 62) relié au deuxième élément mobile (20b), dans lequel le poids est agencé pour être partiellement ou entièrement tourné vers une partie latérale de l'actionneur linéaire dans une direction orthogonale à la direction de va-et-vient, et le poids et l'arbre de sortie effectuent un mouvement de va-et-vient en phases opposées lorsque l'électroaimant est alimenté en courant ; et
un organe de liaison en forme de L (50 ; 31) qui couple l'arbre de sortie (30) et le premier élément mobile (20a), et est configuré pour agencer l'arbre de sortie (30) dans une partie centrale de l'actionneur linéaire (1) sur un plan orthogonal à la direction de va-et-vient.

2. Actionneur linéaire (1) selon la revendication 1, dans lequel
l'arbre de sortie (30) et le poids (61) sont agencés du même côté dans la direction de va-et-vient et en mouvement de va-et-vient en phases opposées.

3. Actionneur linéaire (1) selon l'une quelconque des revendications 1 et 2, comprenant en outre un organe de couplage élastique en forme d'anneau (44) qui couple une extrémité de la partie de logement de bloc magnétique (42a) et une extrémité de la partie de logement de bloc magnétique (42b), où l'organe de couplage élastique en forme d'anneau est formé sur l'extrémité de la partie de logement de bloc magnétique (42a, 42b) plus proche de l'arbre de sortie (30).

4. Actionneur linéaire (1) selon l'une quelconque des revendications 2 et 3, comprenant en outre un organe de liaison (52) qui relie le poids (60) et le deuxième élément mobile.

5. Actionneur linéaire (1) selon l'une quelconque des revendications 2 et 3, dans lequel le poids (62) est une plaque incurvée.

6. Actionneur linéaire (1) selon la revendication 1, dans lequel chacun des éléments mobiles (20a, 20b) comprend une culasse arrière (22),
l'organe de liaison en forme de L (50,31) reliant l'arbre de sortie (30) et le premier élément mobile (20a) est formé d'un seul tenant avec la culasse arrière (22).

7. Actionneur linéaire (1) selon la revendication 1, dans lequel l'arbre de sortie (30) est inséré à travers un trou traversant (45) s'étendant à travers les ressorts à lame (43a) de l'organe de maintien (40) et couplé au premier élément mobile.

8. Dispositif d'hygiène de la cavité buccale comprenant :
l'actionneur linéaire (1) selon l'une quelconque des revendications 1 à 7 ; et
un corps entraîné utilisé pour l'hygiène de la cavité buccale et relié à l'arbre de sortie (30).

9. Dispositif d'hygiène de la cavité buccale selon la revendication 8, dans lequel l'actionneur linéaire (1) est agencé de sorte qu'une direction dans laquelle une force d'attraction agit entre l'électroaimant et l'aimant permanent (21) de l'actionneur linéaire (1) soit opposée à une direction dans laquelle une force de poussée agit sur le corps entraîné pendant l'utilisation du dispositif d'hygiène de la cavité buccale.
